# FASCICULE DE BREVET EUROPEEN

(11) **EP 4 065 353 B1**
(45) Date de publication et mention de la délivrance du brevet: **23.07.2025**
(21) Numéro de dépôt: 20820500.5
(22) Date de dépôt: 23.11.2020
(51) Int. Cl.: B29C 70/88, B29C 70/48, B29C 70/68, B29C 65/50, B29C 65/00, B29D 99/00, F01D 5/00, F01D 5/28, B29L 31/08, F01D 5/14, B29C 70/24, B29C 70/86, B29K 705/00, F04D 29/32

(54) **AUBE COMPOSITE POUR UN MOTEUR D'AERONEF ET SES PROCEDES DE FABRICATION ET DE REPARATION**
VERBUNDSCHAUFEL FÜR EINEN FLUGZEUGMOTOR UND VERFAHREN ZUR HERSTELLUNG UND REPARATUR DERSELBEN
COMPOSITE BLADE FOR AN AIRCRAFT ENGINE, AND PROCESSES OF MANUFACTURING AND REPAIRING SAME

(30) Priorité: 29.11.2019 FR 1913477
(43) Date de publication de la demande: 05.10.2022
(73) Titulaire: SAFRAN, 75015 Paris (FR)
(72) Inventeur: TOUZE, Adrien, 77550 Moissy-Cramayel (FR); LANFANT, Nicolas Pierre, 77550 Moissy-Cramayel (FR); PICON, Romain, 77550 Moissy-Cramayel (FR); SORGNARD, Loïc, 77550 Moissy-Cramayel (FR)
(74) Mandataire: Gevers & Orès
(86) Numéro de dépôt international: PCT/FR2020/052150
(87) Numéro de publication internationale: WO 2021/105600

(56) Documents cités:
- EP-A1- 3 263 836
- EP-A2- 2 867 473
- WO-A1-2015/034612
- WO-A1-2019/186029
- US-A1- 2007 092 379
- US-A1- 2011 194 941
- US-A1- 2013 220 537
- US-A1- 2013 239 586
- US-A1- 2013 276 991
- US-A1- 2018 111 332

## Description

### Domaine technique de l'invention

La présente invention concerne une aube en matériau composite pour une turbomachine d'aéronef, ainsi que des procédés de fabrication et de réparation de cette aube.

### Arrière-plan technique

L'état de la technique comprend notamment les documents FR-A1-2 956 057, FR-A1-3 029 134, FR-A1-3 051 386, US-A1-2011/194941 et US-A1-2007/092379, correspondant au préambule de la revendication 1.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

Il s'agit d'un procédé de réalisation d'une pièce en matériau composite à base de fibres imprégnées de résine. Un tel procédé est par exemple utilisé pour fabriquer une aube de soufflante et comporte plusieurs étapes successives.

On commence par réaliser le tissage de fibres pour obtenir une ébauche de préforme en trois dimensions, puis on découpe l'ébauche pour obtenir une préforme présentant sensiblement la forme de l'aube à obtenir. Cette préforme est alors disposée dans un moule d'injection, qui est refermé. Puis on injecte de la résine à l'état liquide en maintenant une pression sur la résine injectée pendant que l'on effectue la polymérisation de la pièce par chauffage.

Les résines utilisées sont des résines très fluides qui sont à même de bien pénétrer les fibres de la préforme, même lorsqu'elles sont injectées sous une pression réduite. Pendant la polymérisation, sous l'effet de la chaleur, la résine injectée passe successivement de l'état liquide à l'état gélifié et enfin à l'état solide.

Pour la fabrication d'une aube, par exemple de soufflante de turbomachine, une préforme est réalisée par tissage puis est imprégnée avec la résine afin de former une pale. Cette pale comporte un intrados et un extrados qui s'étendent depuis un bord d'attaque jusqu'à un bord de fuite de la pale.

Le matériau composite de la pale est relativement fragile, et en particulier sensible aux chocs, et il est connu de le protéger au moyen d'un bouclier métallique qui est rapporté et fixé sur le bord d'attaque de la pale.

Le bouclier peut être fixé à la pale de deux façons. Une première façon consiste à coller le bouclier sur la pale, après polymérisation de la résine. La colle se présente alors sous forme de pâte.

Une autre façon consiste à fixer le bouclier par co-moulage avec la préforme fibreuse. La préforme est disposée dans le moule et le bouclier est positionné sur le bord de la préforme destiné à former le bord d'attaque de la pale. La résine injectée imprègne la préforme et vient au contact du bouclier pour assurer sa solidarisation à la pale après polymérisation et durcissement.

La présente invention concerne un perfectionnement à cette seconde technologie dans laquelle le bouclier et la préforme subissent un co-moulage. Le document US-A1-2007/0092379 a déjà proposé d'étaler une colle sous forme de pâte entre le bouclier et la préforme, avant l'injection de résine dans la préforme, de façon à former une couche ou un film de colle entre ces éléments. Cependant, cette opération est délicate et présente plusieurs inconvénients : il est difficile de s'assurer que la colle est bien étalée sur toute la surface à coller, et il n'est pas possible de garantir une épaisseur constante de colle sur cette surface. En conclusion, cette solution n'est pas optimale et n'est pas industrialisable car la fabrication peut être difficilement réalisée avec un bon niveau de répétabilité.

L'invention apporte une solution simple, efficace et économique pour assurer un positionnement correct et une tenue mécanique optimale du bouclier sur l'aube.

### Résumé de l'invention

L'invention propose un procédé de fabrication d'une aube en matériau composite pour une turbomachine, en particulier d'aéronef, cette aube comportant une pale comportant un intrados et un extrados qui s'étendent depuis un bord d'attaque jusqu'à un bord de fuite de la pale, l'aube comportant en outre un bouclier métallique s'étendant le long du bord d'attaque de la pale, le procédé comprenant les étapes consistant à :
a) disposer une préforme réalisée par tissage de fibres en trois dimensions dans un moule, le bouclier étant positionné sur un bord de la préforme destiné à former le bord d'attaque de la pale,
b) injecter de la résine polymérisable dans le moule afin qu'elle imprègne la préforme de façon à former la pale après solidification, caractérisé en ce qu'au moins un film adhésif double face, revêtu ou imbibé sur ses deux faces d'une colle de manière à être collant sur ses deux faces, est intercalé entre le bouclier et le bord de la préforme lors de l'étape a).

L'invention propose ainsi d'assurer la fixation du bouclier sur la pale par co-moulage et par un film adhésif double face , c'est-à-dire par une bande ou un ruban de matière adhésive. Le film adhésif est intercalé entre le bouclier et le bord de la préforme et est destiné à améliorer et maintenir la position du bouclier sur le bord de la préforme, et pour améliorer également la tenue et la résistance à l'arrachement du bouclier vis-à-vis de la pale. On comprend donc que, lors de l'injection de résine dans le moule de fabrication de la pale, cette résine va imprégner la préforme et va également venir au contact du film voire également du bouclier, assurant ainsi une fixation optimale du bouclier sur l'aube.

Le procédé selon l'invention peut comprendre une ou plusieurs des caractéristiques suivantes, prises isolément les unes des autres ou en combinaison les unes avec les autres :
- ledit film adhésif est découpé suivant la forme du bord et/ou du bouclier lors de l'étape a) ;
- le film adhésif est collé sur le bord de la préforme préalablement au positionnement du bouclier sur ce bord ;
- le bouclier a une forme de dièdre et définit une rainure à section en V, ledit au moins un film adhésif étant collé sur le bouclier à l'intérieur de la rainure ;
- un premier film adhésif est collé dans la rainure, sur une première paroi longitudinale du bouclier, et un second film adhésif est collé dans la rainure, sur une seconde paroi longitudinale du bouclier ;
- préalablement au positionnement du bouclier sur le bord de la préforme, ce bord est comprimé ;
- le bord de la préforme est comprimé jusqu'à ce qu'il atteigne une épaisseur représentant 75% à 95% d'une largeur ou dimension transversale maximale de la rainure à la fin de l'étape b) ;
- la préforme est humidifiée avant de comprimer son bord ;
- au moins un tissu d'interface est intercalé entre la préforme et le film adhésif, et s'étend le long dudit bord de la préforme ; le tissu est particulièrement avantageux en particulier lors d'une réparation de l'aube, comme cela sera évoqué dans ce qui suit ;
- un unique tissu d'interface est plié et inséré à l'intérieur de la rainure ;
- le film adhésif, voire le tissu d'interface, est/sont chauffé(s) pour favoriser l'adhérence ;
- le film adhésif dépasse du bouclier et s'étend sur des surfaces de la préforme non recouvertes par le bouclier.

Le présent document concerne également une aube en matériau composite pour une turbomachine, en particulier d'aéronef, cette aube comportant une pale comportant un intrados et un extrados qui s'étendent depuis un bord d'attaque jusqu'à un bord de fuite de la pale, l'aube comportant en outre un bouclier métallique s'étendant le long du bord d'attaque de la pale, cette aube étant fabriquée par un procédé tel que décrit ci-dessus et comportant au moins un film adhésif entre le bouclier et le bord d'attaque de la pale, voire également au moins un tissu d'interface intercalé entre la pale et le film adhésif.

Le présent document concerne enfin un procédé de réparation d'une aube telle que décrite ci-dessus lorsqu'elle est équipée dudit tissu d'interface, le bouclier de cette aube étant endommagé et devant être remplacé, le procédé comprenant les étapes consistant à :
- retirer le bouclier et le film adhésif, le tissu d'interface étant destiné à rester sur le bord d'attaque de la pale, et
- coller un nouveau bouclier sur ce tissu d'interface.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube composite de turbomachine d'aéronef,
[Fig.2] la figure 2 est un schéma bloc montrant des étapes d'un procédé selon l'invention de fabrication d'une aube telle que celle représentée à la figure 1,
[Fig.3] la figure 3 est une vue schématique en perspective de deux films adhésifs utilisés dans le cadre d'un procédé de fabrication selon l'invention,
[Fig.4] la figure 4 est une vue schématique en perspective d'un bouclier sur lequel sont collés les deux films de la figure 3,
[Fig.5] la figure 5 est une vue schématique en perspective d'un tissu d'interface manipulé par un opérateur lors d'un procédé de fabrication selon l'invention,
[Fig.6] la figure 6 est une vue schématique en perspective d'un bouclier sur lequel est positionné le tissu d'interface de la figure 5,
[Fig.7] la figure 7 est une vue schématique en perspective d'une préforme dont un bord subit une compression,
[Fig.8] la figure 8 est une vue schématique en perspective de la préforme de la figure 7 sur un bord de laquelle est positionné le bouclier de la figure 6,
[Fig.9] la figure 9 est une vue schématique en perspective d'un moule dans lequel sont destinés à être disposés la préforme et le bouclier, et dans lequel est destinée à être injectée la résine, et
[Fig.10] la figure 10 est une vue schématique en perspective d'une préforme sur un bord de laquelle est collé un film adhésif, et illustre une variante de réalisation de l'invention.

### Description détaillée de l'invention

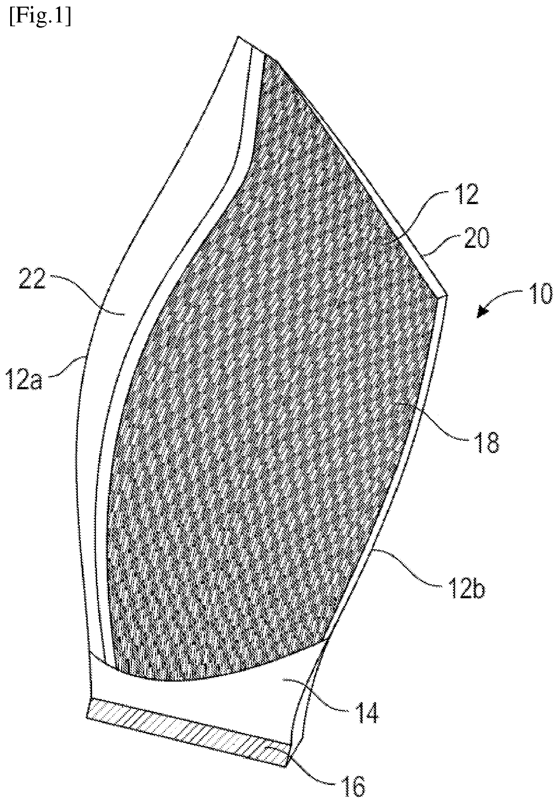

On se réfère d'abord à la figure 1 qui illustre une aube 10 en matériau composite pour une turbomachine, cette aube 10 étant par exemple une aube de soufflante.

L'aube 10 comprend une pale 12 reliée par une échasse 14 à un pied 16 qui a par exemple une forme en queue d'aronde et est conformé pour être engagé dans une alvéole de forme complémentaire d'un disque de rotor, afin de retenir l'aube sur ce disque.

La pale 12 comprend un bord d'attaque 12a et un bord de fuite 12b des gaz qui s'écoulent dans la turbomachine. La pale 12 a un profil aérodynamique incurvé voire vrillé et comprend un intrados 18 et un extrados 20 s'étendant entre les bords d'attaque 12a et de fuite 12b.

La pale 12 est réalisée à partir d'une préforme fibreuse obtenue par tissage en trois dimensions de fibres, par exemple en carbone.

Le bord d'attaque 12a de la pale est renforcé et protégé par un bouclier métallique 22 qui est fixé sur ce bord d'attaque 12a. Le bouclier 22 est par exemple en alliage à base de nickel et cobalt.

Dans la présente invention, cette fixation est réalisée d'une part par co-moulage de la préforme avec le bouclier 22, et d'autre part par collage du bouclier 22 au moyen d'au moins un film adhésif 24.

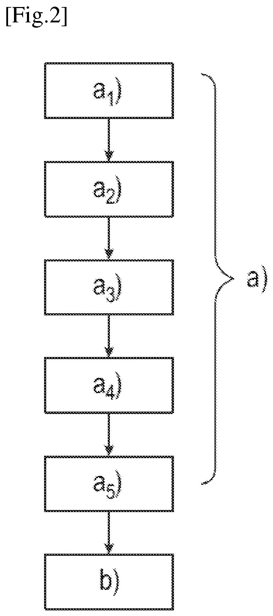

La figure 2 est un organigramme qui illustre des étapes d'un procédé de fabrication d'une aube composite 10 telle que celle représentée à la figure 1.

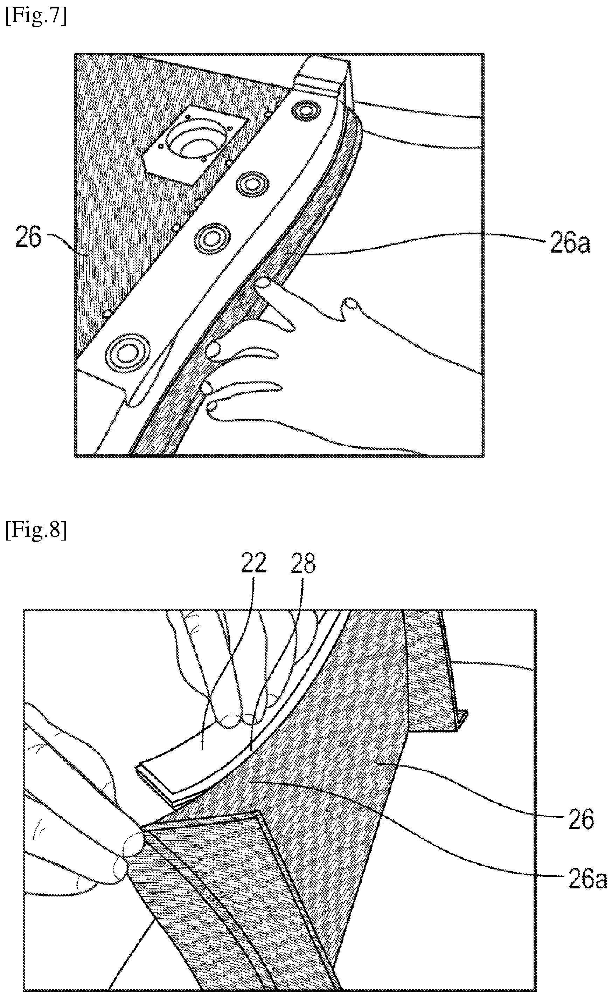

Le procédé peut comprendre plusieurs étapes dont certaines sont facultatives. La première étape a) du procédé comprend plusieurs sous-étapes ou opérations. Lors d'une première opération a1) évoquée dans ce qui précède, une préforme fibreuse 26 est réalisée par tissage de fibres, cette préforme étant notamment visible à la figure 8. La préforme 26 obtenue est brute et peut subir des opérations telles qu'une découpe par exemple. Les extrémités des fibres de la préforme 26 ont tendance à foisonner sur la surface extérieure de la préforme, ce qui peut engendrer un surépaississement de la préforme par rapport aux côtes finales souhaitées de la pale.

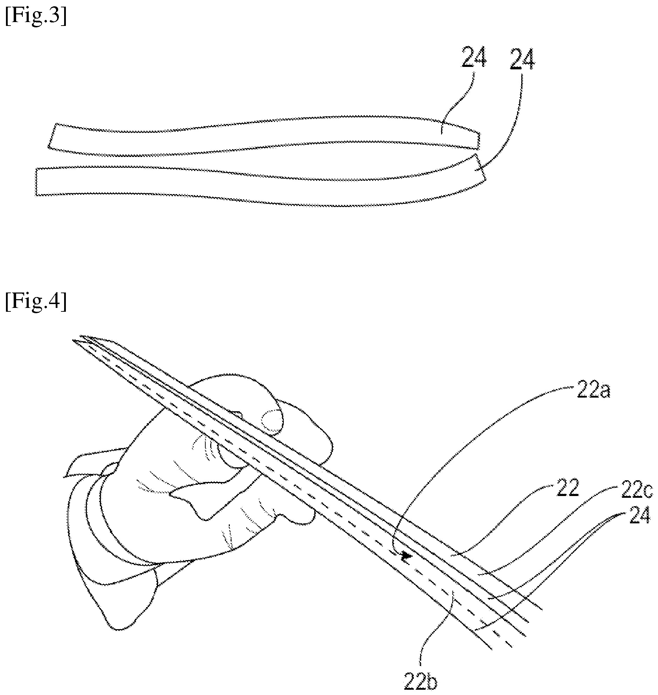

Lors d'une autre opération a2) du procédé, illustrée à la figure 3, un ou plusieurs films adhésifs 24 sont préparés. Ce film adhésif 24 est destiné à être intercalé entre le bouclier 22 et la préforme 26, avant injection de la résine dans le moule de fabrication de l'aube.

Ce film adhésif 24 est un film double face, c'est-à-dire un film collant sur ses deux faces. Ce film est ainsi revêtu ou imbibé sur ses deux faces d'une colle par exemple celles commercialisées par la société 3M sous la référence AF191K^{®} ou celle commercialisée par la société Solvay sous la référence FM309-1^{®}.

Ce film adhésif 24 a par exemple une épaisseur comprise entre 0,1mm et 0,2 mm. Ce film 24 peut se présenter sous forme d'une bande. Il peut ainsi avoir une forme allongée dont les dimensions sont fonction de celle du bouclier 22. Le bouclier 22, tel que représenté à la figure 4, a une forme de dièdre et définit une rainure 22a à section en V.

Le film adhésif 24 est de préférence collé sur le bouclier 22, à l'intérieur de la rainure 22a. Comme cela est visible à la figure 3, le plus simple et efficace est de découper deux films adhésifs 24 et de les coller respectivement sur une première paroi longitudinale 22b du bouclier, et sur une seconde paroi longitudinale 22c du bouclier, à l'intérieur de la rainure 22a.

On obtient alors le montage de la figure 4.

Une opération a3) suivante, qui est toutefois facultative mais préférée, consiste à intercaler un tissu d'interface 28 entre le ou les films adhésifs 24 et la préforme 26, toujours avant injection de la résine dans cette préforme 26.

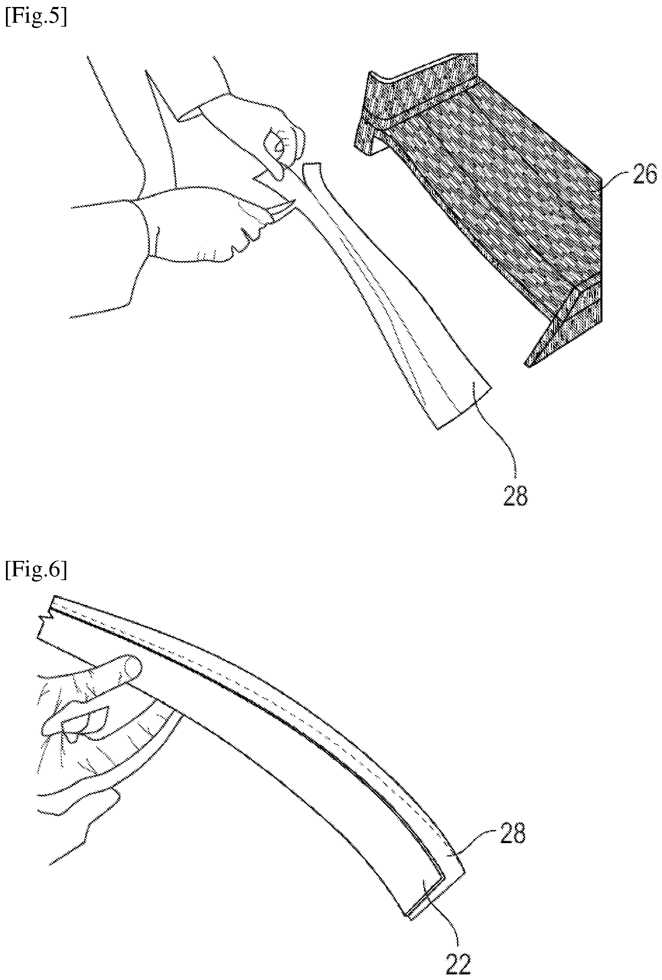

Le tissu d'interface 28 est de préférence préalablement coupé aux bonnes dimensions, comme illustré à la figure 5. Contrairement à ce qui est évoqué plus haut concernant le film 24, un unique tissu 28 peut être découpé. On comprend que ce tissu 28 doit être plié en deux et inséré dans la rainure 22a, par-dessus les films adhésifs 24, de façon à ce qu'une partie latérale du tissu s'étende sur le film adhésif déposé sur la première paroi longitudinale 22b du bouclier 22, et que l'autre partie latérale du tissu 28 s'étende sur le film adhésif 24 déposé sur la seconde paroi longitudinale 22c du bouclier, à l'intérieur de la rainure 22a.

On obtient alors le montage de la figure 6.

La figure 7 illustre une opération avantageuse du procédé de fabrication, qui consiste à comprimer le bord 26a de la préforme 26 sur lequel le bouclier 22 est destiné à être fixé (opération a4)).

Cette compression peut être faite au moyen d'une presse par exemple. Le bord 26a de la préforme 26 est de préférence comprimé jusqu'à ce qu'il atteigne une épaisseur représentant 75% à 95% d'une largeur ou dimension transversale maximale de la rainure 22a du bouclier 22 à la fin du procédé. Avant compression de la préforme, son épaisseur peut être de 120% environ par rapport à l'épaisseur finale de la pale du fait du foisonnement évoqué dans ce qui précède.

La figure 8 illustre une opération suivante (a5)) du procédé lors de laquelle le bouclier 22, équipé ici des films adhésifs 24, et éventuellement du tissu d'interface 28, est positionné sur le bord 26a, éventuellement comprimé, de la préforme 26.

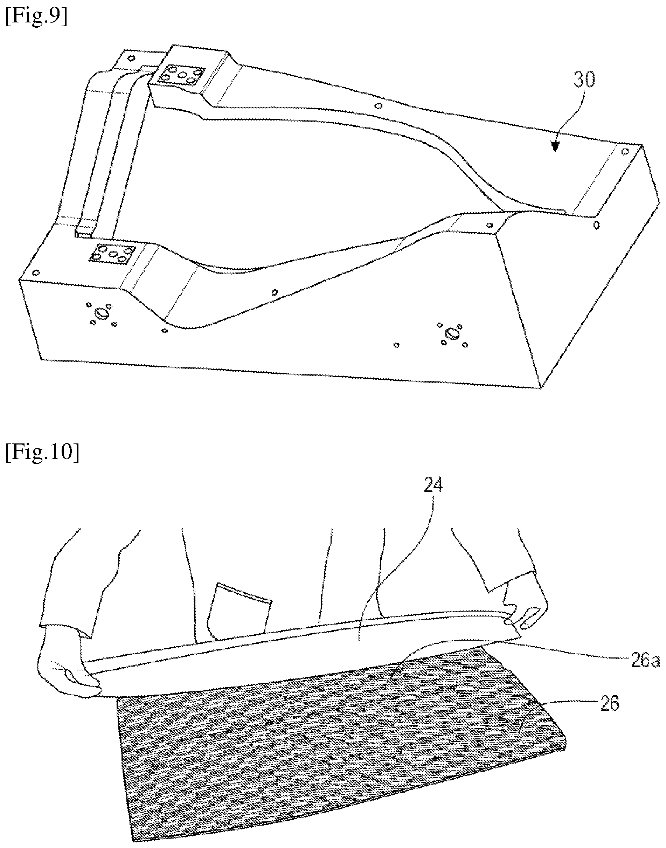

Le bouclier de la figure 8 est alors positionné dans un moule 30 qui est fermé (figure 9) par exemple avec un contre-moule. La fermeture du moule 30 doit permettre d'appliquer une pression suffisante sur le bouclier 22 afin d'éviter que de la résine recouvre le bouclier lors de l'injection. Cette pression peut engendrer une déformation du bouclier en particulier une réduction de la largeur de la rainure 22a, qui va ainsi adopter une valeur correspondant à l'épaisseur cumulée souhaitée de la pale, du ou des films et du tissu d'interface.

Les opérations a1) à a5) successives dont certaines sont facultatives représentent une première étape a) du procédé de fabrication.

Lors d'une seconde étape b) du procédé, de la résine est injectée dans le moule 30 et est destinée à imprégner la préforme 26 et à venir au contact du tissu d'interface 28 lorsqu'il est présent, ou sinon du film adhésif et du bouclier. Après polymérisation et durcissement de la résine, le bouclier 22 est solidarisé à la pale par l'intermédiaire des films adhésifs 24 et de la résine.

L'aube 10 ainsi obtenue, après polymérisation de la résine, est avantageuse dans la mesure où son bouclier 22 est parfaitement positionné et maintenu sur la pale 12.

La figure 10 illustre une variante de réalisation du procédé de fabrication selon l'invention, dans laquelle le film adhésif 24 est collé sur la préforme 26 et non pas sur le bouclier 22. On comprend alors que le bouclier 22 est ensuite positionné et monté sur le bord 26a de la préforme 26, sur lequel est collé le film adhésif 24. L'injection et la polymérisation de la résine dans la préforme situé dans le moule 30, peuvent alors intervenir.

Préalablement à cette étape, un tissu d'interface 28 peut être positionné sur la préforme 26. Le film adhésif 24 est alors collé sur le tissu d'interface 28, avant le positionnement du bouclier 22 sur le bord 26a de la préforme 26 et sur le film adhésif 24.

Le présent document concerne aussi une aube composite 10 obtenue par le procédé précité, ainsi qu'un procédé de réparation de ce type d'aube. Lorsque le bouclier 22 est endommagé et doit être remplacé, le procédé comprend les étapes consistant à :
- retirer le bouclier 22 et le film adhésif 24, le tissu d'interface 28 étant destiné à rester sur le bord d'attaque de la pale lorsque que ce tissu est présent, et
- coller un nouveau bouclier, en particulier sur le tissu d'interface lorsqu'il est présent.

## Revendications

1. Procédé de fabrication d'une aube (10) en matériau composite pour une turbomachine, en particulier d'aéronef, cette aube comportant une pale (12) comportant un intrados (14) et un extrados (16) qui s'étendent depuis un bord d'attaque (12a) jusqu'à un bord de fuite (12b) de la pale, l'aube comportant en outre un bouclier métallique (22) s'étendant le long du bord d'attaque de la pale, le procédé comprenant les étapes consistant à :
a) disposer une préforme (26) réalisée par tissage de fibres en trois dimensions dans un moule, le bouclier étant positionné sur un bord de la préforme destiné à former le bord d'attaque de la pale,
b) injecter de la résine polymérisable dans le moule afin qu'elle imprègne la préforme de façon à former la pale après solidification,
**caractérisé en ce qu'**au moins un film adhésif (24) double face, revêtu ou imbibé sur ses deux faces d'une colle de manière à être collant sur ses deux faces, est intercalé entre le bouclier et le bord de la préforme lors de l'étape a).

2. Procédé selon la revendication 1, dans lequel ledit film adhésif (24) est découpé suivant la forme du bord (26a) et/ou du bouclier (22) lors de l'étape a).

3. Procédé selon la revendication 1 ou 2, dans lequel le film adhésif (24) est collé sur le bord (26a) de la préforme (26) préalablement au positionnement du bouclier (22) sur ce bord.

4. Procédé selon la revendication 1 ou 2, dans lequel le bouclier (22) a une forme de dièdre et définit une rainure (22a) à section en V, ledit au moins un film adhésif (24) étant collé sur le bouclier à l'intérieur de la rainure.

5. Procédé selon la revendication précédente, dans lequel un premier film adhésif (24) est collé dans la rainure (22a), sur une première paroi longitudinale (22b) du bouclier, et un second film adhésif est collé dans la rainure, sur une seconde paroi longitudinale (22c) du bouclier.

6. Procédé selon l'une des revendications précédentes, dans lequel, préalablement au positionnement du bouclier (22) sur le bord (26a) de la préforme (26), ce bord est comprimé.

7. Procédé selon la revendication précédente, en dépendance de la revendication 4 ou 5, dans lequel le bord (26a) de la préforme (26) est comprimé jusqu'à ce qu'il atteigne une épaisseur représentant 75% à 95% d'une largeur ou dimension transversale maximale de la rainure (22a).

8. Procédé selon la revendication 6 ou 7, dans lequel la préforme (26) est humidifiée avant de comprimer son bord (26a).

9. Procédé selon l'une des revendications précédentes, dans lequel au moins un tissu d'interface (28) est intercalé entre la préforme (26) et le film adhésif (24), et s'étend le long dudit bord (26a) de la préforme.

10. Procédé selon la revendication précédente, en dépendance de la revendication 4 ou 5, dans lequel un unique tissu d'interface (28) est plié et inséré à l'intérieur de la rainure (22a).

11. Procédé selon la revendication 9 ou 10, dans lequel le film adhésif (24), voire le tissu d'interface (28), est/sont chauffé(s) pour favoriser l'adhérence.

12. Procédé selon l'une des revendications précédentes, dans lequel le film adhésif (24) dépasse du bouclier (22) et s'étend sur des surfaces de la préforme (26) non recouvertes par le bouclier.

## Patentansprüche

1. Verfahren zur Herstellung einer Schaufel (10) aus Verbundmaterial für ein Turbotriebwerk, insbesondere eines Luftfahrzeugs, wobei diese Schaufel ein Schaufelblatt (12) umfasst, das eine innere windzugewandte Seite (14) und eine äußere windabgewandte Seite (16) umfasst, die sich ausgehend von einer Angriffskante (12a) bis zu einer Abströmkante (12b) des Schaufelblatts erstrecken, wobei die Schaufel weiter ein metallisches Schutzschild (22) umfasst, das sich entlang der Angriffskante des Schaufelblatts erstreckt, wobei das Verfahren die Schritte umfasst, die aus Folgendem bestehen:
a) Anordnen einer Vorform (26), die durch Verweben von Fasern in drei Dimensionen gefertigt ist, in einer Form, wobei das Schutzschild auf einer Kante der Vorform positioniert ist, die dazu vorgesehen ist, die Angriffskante des Schaufelblatts zu bilden,
b) Einspritzen des polymerisierbaren Harzes in die Form, damit es die Vorform so imprägniert, dass das Schaufelblatt nach Verfestigung gebildet ist,
**dadurch gekennzeichnet, dass** mindestens ein doppelseitiger Haftfilm (24), der auf ihren zwei Flächen mit einem Leim derart beschichtet oder durchtränkt ist, um auf ihren zwei Flächen klebend zu sein, bei Schritt a) zwischen den Schutzschild und die Kante der Vorform eingefügt ist.

2. Verfahren nach Anspruch 1, wobei der Haftfilm (24) bei Schritt a) der Form der Kante (26a) und/oder des Schutzschilds (22) folgend geschnitten ist.

3. Verfahren nach Anspruch 1 oder 2, wobei der Haftfilm (24) im Vorfeld der Positionierung des Schutzschilds (22) auf dieser Kante auf die Kante (26a) der Vorform (26) geklebt ist.

4. Verfahren nach Anspruch 1 oder 2, wobei der Schutzschild (22) eine Diederform aufweist und eine Nut (22a) mit V-Querschnitt definiert, wobei der mindestens eine Haftfilm (24) im Inneren der Nut auf den Schutzschild geklebt ist.

5. Verfahren nach dem vorstehenden Anspruch, wobei auf einer ersten längsgerichteten Wand (22b) des Schutzschilds ein erster Haftfilm (24) in die Nut (22a) geklebt ist und auf einer zweiten längsgerichteten Wand (22c) des Schutzschilds ein zweiter Haftfilm in die Nut geklebt ist.

6. Verfahren nach einem der vorstehenden Ansprüche, wobei diese Kante im Vorfeld der Positionierung des Schutzschilds (22) auf die Kante (26a) der Vorform (26) verdichtet ist.

7. Verfahren nach dem vorstehenden Anspruch, in Abhängigkeit von Anspruch 4 oder 5, wobei die Kante (26a) der Vorform (26) verdichtet ist, bis sie eine Dicke erreicht, die 75 % bis 95 % einer Breite oder maximalen Querabmessung der Nut (22a) darstellt.

8. Verfahren nach Anspruch 6 oder 7, wobei die Vorform (26) vor dem Verdichten ihrer Kante (26a) befeuchtet ist.

9. Verfahren nach einem der vorstehenden Ansprüche, wobei mindestens ein Grenzflächengewebe (28) zwischen der Vorform (26) und dem Haftfilm (24) eingefügt ist und sich entlang der Kante (26a) der Vorform erstreckt.

10. Verfahren nach dem vorstehenden Anspruch, in Abhängigkeit von Anspruch 4 oder 5, wobei ein einzelnes Grenzflächengewebe (28) gefaltet und in das Innere der Nut (22a) eingesetzt ist.

11. Verfahren nach Anspruch 9 oder 10, wobei der Haftfilm (24), sogar das Grenzflächengewebe (28), erwärmt ist/sind, um die Haftung zu begünstigen.

12. Verfahren nach einem der vorstehenden Ansprüche, wobei der Haftfilm (24) von dem Schutzschild (22) herausragt und sich auf den Oberflächen der Vorform (26), die nicht von dem Schutzschild bedeckt sind, erstreckt.

## Claims

1. A method for manufacturing a blade (10) of composite material for a turbomachine, in particular for an aircraft, this blade comprising a vane (12) comprising a pressure side (14) and a suction side (16) which extend from a leading edge (12a) to a trailing edge (12b) of the vane, the blade further comprising a metal sheath (22) extending along the leading edge of the vane, the method comprising the steps consisting in:
a) placing a preform (26) made by weaving fibres in three dimensions in a mould, the sheath being positioned on an edge of the preform intended to form the leading edge of the vane,
b) injecting polymerizable resin into the mould to impregnate the preform so as to form the vane after solidification,
**characterised in that** at least one double-sided adhesive film (24), coated or soaked on its both faces with a glue so as to be adhesive on its both faces, is interposed between the sheath and the edge of the preform during the step a).

2. The method according to claim 1, wherein said adhesive film (24) is cut according to the shape of the edge (26a) and/or the sheath (22) during the step a).

3. The method according to claim 1 or 2, wherein the adhesive film (24) is glued on the edge (26a) of the preform (26) prior to the positioning of the sheath (22) on that edge.

4. The method of claim 1 or 2, wherein the sheath (22) is dihedral in shape and defines a groove (22a) with a V-shaped cross-section, said at least one adhesive film (24) being glued on the sheath within the groove.

5. The method according to the preceding claim, wherein a first adhesive film (24) is glued in the groove (22a) on a first longitudinal wall (22b) of the sheath and a second adhesive film is glued in the groove on a second longitudinal wall (22c) of the sheath.

6. The method according to one of the preceding claims, wherein, prior to the positioning of the sheath (22) on the edge (26a) of the preform (26), this edge is compressed.

7. The method according to the preceding claim, in dependence on claim 4 or 5, wherein the edge (26a) of the preform (26) is compressed until it reaches a thickness representing 75% to 95% of a maximum transverse width or dimension of the groove (22a).

8. The method of claim 6 or 7, wherein the preform (26) is moistened prior to compressing its edge (26a).

9. The method according to any of the preceding claims, wherein at least one interface fabric (28) is interposed between the preform (26) and the adhesive film (24), and extends along said edge (26a) of the preform.

10. The method according to the preceding claim, in dependence on claim 4 or 5, wherein a single interface fabric (28) is folded and inserted within the groove (22a).

11. The method of claim 9 or 10, wherein the adhesive film (24) or even the interface fabric (28) is/are heated to promote the adhesion.

12. The method of any of the preceding claims, wherein the adhesive film (24) protrudes from the sheath (22) and extends onto surfaces of the preform (26) not covered by the sheath.
